Europäisches Patentamt

(19) European Patent Office

Office européen des brevets

(11) Numéro de publication: **0 202 970 B1**

(12) **FASCICULE DE BREVET EUROPEEN**

(51) Int. Cl.⁴: **G01L 27/00**

(45) Date de publication du fascicule du brevet:
**12.07.89**

(21) Numéro de dépôt: **86400778.6**

(22) Date de dépôt: **11.04.86**

(54) Dispositif à piston pour la mesure très précise des pressions de fluide.

(30) Priorité: **22.04.85 FR 8506063**

(43) Date de publication de la demande:
**26.11.86 Bulletin 86/48**

(45) Mention de la délivrance du brevet:
**12.07.89 Bulletin 89/28**

(84) Etats contractants désignés:
**AT BE CH DE GB IT LI LU NL SE**

(56) Documents cités:
**EP-A- 0 112 647**
**FR-A- 2 481 801**

**CONTROL AND INSTRUMENTATION,**
**vol. 11, no. 5, mai 1979, pages 29,31, LONDRES, GB;**
**"Pressure measurement standards for laboratory and production use"**

(73) Titulaire: **Delajoud, Pierre, 109, rue de Longchamp, F-92200 Neuilly sur Seine(FR)**
Titulaire: **DESGRANGES & HUOT, 56 rue des Ecoles B.P. 125, F-93303 Aubervilliers Cedex(FR)**

(72) Inventeur: **Delajoud, Pierre, 109 Rue de Longchamp, F-92210 Neuilly(FR)**

(74) Mandataire: **Ballot, Paul Denis Jacques et al, Cabinet Ballot-Schmit 84, avenue Kléber, F-75116 Paris(FR)**

## Description

La présente invention concerne la mesure des pressions de fluide, notamment de gaz, avec une très grande précision.

Elle a pour but de réaliser un appareil qui permet d'effectuer la mesure très précise tant d'une pression absolue que d'une pression relative (par rapport à la pression atmosphérique), ou même d'une différence de pressions (différence entre les pressions de deux fluides).

L'appareil selon l'invention peut constituer en particulier un étalon de pression, apte à effectuer la vérification et l'étalonnage des manomètres, ou un capteur ou un transmetteur de pression.

On a décrit dans le brevet français n° 2.481.801 déposé par les demandeurs le 30 avril 1980 un dispositif pour la mesure très précise des pressions de fluide avec affichage de la pression mesurée, comprenant, en combinaison, un cylindre vertical, un piston apte à coulisser dans ce cylindre à frottement visqueux, la pression à mesurer étant appliquée sur la face supérieure du piston, des moyens pour entraîner en rotation ledit piston dans ledit cylindre, une balance dynamométrique électromagnétique de précision à affichage et comportant un axe destiné à se voir appliquer la force à mesurer et des moyens pour transmettre audit axe de la balance la force appliquée sur la face supérieure du piston par la pression à mesurer, avec limitation des efforts maximaux.

Le dispositif selon ce brevet français antérieur mesurait en fait une pression relative, à savoir celle d'un fluide appliquée sur la face supérieure dudit piston, par rapport à la pression atmosphérique qui agissait sur la face inférieure de ce piston.

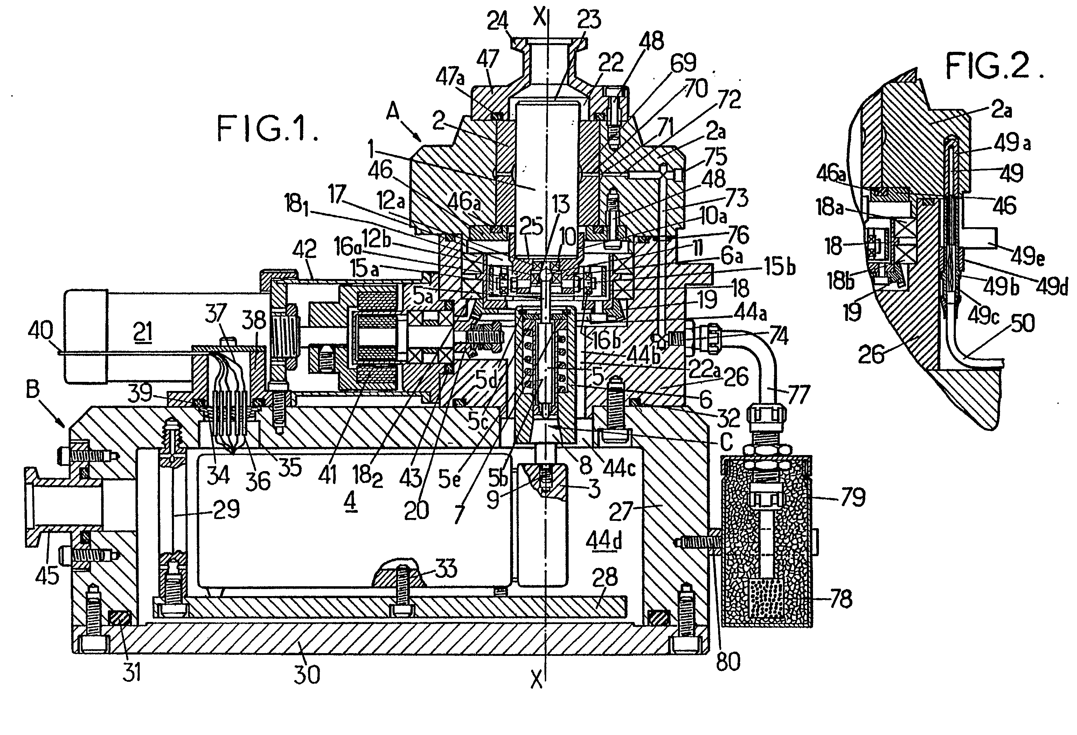

Un autre dispositif pour la mesure d'une pression relative est décrit dans l'article publié dans la revue Control and Instrumentation, vol. 11, N° 5 (Londres, Mai 1979), pages 29 et 31. ce dispositif, qui est fabriqué par un des demandeurs, à savoir la société DESGRANGES ET HUOT (dont le sigle est D & H), comporte des moyens pour faire tourner le piston dans le cylindre de mesure tout en assurant une bonne lubrification du jeu entre le piston tournant et le cylindre fixe en prévoyant par exemple (figure 2B page 31 de cet article) un récipient connecté par des tubulures, d'une part, à sa partie inférieure au jeu précité et, d'autre part, à sa partie supérieure à une chambre disposée sous le piston et connectée à la pression à mesurer, ledit récipient étant en partie rempli du lubrifiant de même que la tubulure qui connecte la partie inférieure du récipient au jeu. Dans ce dispositif la face inférieure du piston qui plonge dans ladite chambre est soumise à la pression à mesurer, alors que la face supérieure du piston est soumise à la pression atmosphérique ambiante, ce qui permet de réaliser une mesure différentielle de pression.

Par ailleurs, la demande européenne EP-AI 0 112 647 publiée le 4 juillet 1984 décrit un dispositif de mesure de pression comportant un piston dont une extrémité se voit appliquer la pression à mesurer et dont l'autre extrémité s'applique contre la partie mobile d'une balance de précision, ledit piston pouvant se déplacer longitudinalement dans un manchon qui est entraîné en rotation, le piston étant, lui, fixe en rotation. Un tel dispositif est en fait une variante du dispositif décrit dans le brevet français précité n° 2.481.801, la rotation du piston dans le cylindre prévue dans ce brevet n° 2.481.801 étant remplacée par la rotation du manchon (faisant office de cylindre) autour du piston dans la demande européenne n° 0 112 647.

Dans ces trois documents antérieurs (brevet français n° 2.481.801, article de Control and Instrumentation et demande européenne EP-AI 0 112 647) le piston reçoit sur une face la pression à mesurer, tandis que l'autre face du piston agit sur la partie mobile d'une balance de précision (dans le brevet et la demande de brevet précités), ou bien reçoit des poids calibrés (artircle précité). On réalise ainsi une mesure de pression relative par rapport à la pression atmosphérique.

Contrairement à ces enseignements antérieurs, la présente invention vise à réaliser un étalon de mesure d'une pression de fluide, notamment de la pression absolue d'un gaz, en prévoyant l'application sur la face supérieure d'un piston de mesure de la pression, tournant dans un cylindre, la pression à mesurer tout en permettant d'appliquer sur la face inférieure du piston de mesure de la pression, suivant l'utilisation désirée, soit le vide (pour effectuer une mesure absolue de pression), soit la pression atmosphérique (pour effectuer une mesure relative de pression, par rapport à cette pression atmosphérique), soit une autre pression désirée (pour effectuer une mesure de différence de pressions).

A cet effet, l'invention a pour objet un dispositif pour la mesure très précise des pressions de fluide avec affichage de la pression mesurée, comportant un cylindre vertical, un piston apte à coulisser dans ce cylindre à frottement visqueux, la pression à mesurer étant appliquée sur la face supérieure du piston dans une enceinte supérieure, des moyens pour entraîner en rotation ledit piston dans ledit cylindre, une balance dynamométrique électromagnétique de précision à affichage et comportant une pièce destinée à se voir appliquer la force à mesurer et des moyens pour transmettre à la pièce de la balance la force appliquée sur le piston par la pression à mesurer, avec limitation des efforts maximaux, dispositif caractérisé en ce qu'il comporte, en combinaison avec l'ensemble cylindre-piston : une enceinte étanche inférieure à la partie inférieure de l'ensemble cylindre-piston, cette enceinte inférieure pouvant être mise sous vide ou mise sous une pression désirée notamment la pression atmosphérique ou celle d'un fluide; et des moyens pour alimenter en permanence, en un fluide, le jeu entre le piston et le cylindre afin d'assurer un centrage correct du piston dans le cylindre, même si les enceintes supérieure et inférieure précitées sont mises sous vide.

De préférence, lesdits moyens sont constitués par une gorge annulaire prévue notamment à mi-hauteur du cylindre et alimentée en gaz propre et sec à la pression atmosphérique.

Le dispositif comporte en outre avantageusement des moyens pour mesurer la température au niveau de l'ensemble cylindre-piston et des moyens pour corriger, en fonction de cette température, la valeur de la pression mesurée.

L'invention pourra, de toute façon, être bien comprise à l'aide du complément de description qui suit, ainsi que des dessins ci-annexés, lesquels complément et dessins sont, bien entendu, donnés surtout à titre d'indication.

La figure 1 est une vue synthétique descriptive des éléments actifs du dispositif, constituée par des coupes suivant différents plans verticaux de coupe.

La figure 2 est une coupe partielle par un plan vertical montrant la disposition des moyens pour corriger l'influence de la température.

La figure 3 est une vue extérieure schématique en plan illustrant l'implantation des différents éléments du dispositif.

Les figures 4A à 4F illustrent, en coupe et à plus grande échelle, l'ensemble piston-cylindre, afin de faciliter l'explication du fonctionnement des moyens pour alimenter en permanence en un fluide le jeu entre le piston et le cylindre pour différentes pressions de mesure.

Les figures 5 et 6, enfin, représentent, à plus grande échelle, respectivement en coupe par un plan perpendiculaire à l'axe XX et par VI-VI de la figure 5, le système d'entraînement en rotation du piston.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser un dispositif pour la mesure très précise des pressions de fluide, on s'y prend comme suit ou d'une manière analogue.

Référence étant faite à la figure 1, on va exposer tout d'abord la structure générale du dispositif de mesure des pressions, structure générale qui entre dans le cadre du brevet français précité.

Le dispositif comprend trois parties principales, à savoir : une partie A comportant essentiellement l'élément de mesure avec un piston 1 et un cylindre 2; une partie B constituant balance électromagnétique avec une pièce 3 destinée à recevoir la force à mesurer; et une partie de liaison C transmettant la force du piston 1 de l'ensemble A à la pièce 3 de la balance B.

La partie A comprend tout d'abord, comme indiqué ci-dessus, un cylindre vertical 2 et un piston 1 coulissant dans le cylindre 2 dont l'ensemble constitue l'élément de mesure proprement dit, en assurant la transformation d'une pression ou d'une différence de pressions en une force, force transmise par la partie C à la balance électromagnétique B.

La balance électromagnétique est constituée par un dynamomètre à ré-équilibrage électromagnétique, par exemple du type numérique ou digital, fournissant une grandeur proportionnelle à la force transmise par le piston 1, avec affichage numérique permettant une lecture directe et immédiate et/ou transmission par un interface à un calculateur.

Sur la figure 1 on a représenté schématiquement la bobine du dynamomètre désignée sous la référence 4.

La liaison en translation, suivant un axe vertical XX, de la pièce 3 du dynamomètre (partie B) avec le piston 1 (de la partie A) est assurée par une bielle 5 logée dans un bloc de couplage 6; un joint torique 7, pris en sandwich entre la bielle 5 et une douille 5b, assure une liaison souple entre la bielle 5 et le bloc 6, tout en permettant un léger débattement angulaire de la bielle dans ce bloc.

L'extrémité inférieure du bloc de couplage 6 est dotée d'un évidement conique d'axe XX (la partie rétrécie du tronc de cône étant dirigée vers le haut) dans lequel pénètre une pièce tronconique 8 formant pièce de liaison C et terminée par une tige filetée 9 vissée dans la pièce 3 du dynamomètre.

La partie supérieure du bloc de couplage 6 coopère avec la tête 6a du piston 1 dans laquelle est ménagé un logement 10 suivi d'un évidement 10a qui enserre l'extrémité inférieure du piston 1. Une bille 11 en carbure de tungstène est en contact avec l'extrémité supérieure de la tige 5a de la bielle 5, mais non avec le piston 1. Cette bille 11 est disposée entre une butée à bille supérieure 12a, qui la sépare du piston 1 et qui est montée libre radialement de manière à se centrer sur la bille 1, et un roulement à billes inférieur 12b qui centre la bille 11 par rapport à l'axe du piston 1.

Un tel montage assure la transmission d'efforts, même importants, entre piston 1 et bielle 5 sans risque de détérioration, ni d'induction de bruits axiaux.

Une rondelle 13 assure la retenue de la butée à billes 12a dans la tête 6a de piston, tandis que le roulement à billes 12b assure le centrage de la bille 11 par rapport à la tête de piston 6a. Ce roulement 12b, sauf sa bague intérieure, est mobile en rotation, avec la tête 6a de piston et le piston 1 lui-même, autour de la bague intérieure de ce roulement qui est, elle, fixe en rotation, de même que la bille 11 que cette bague intérieure entoure.

Grâce à cette organisation, le piston 1 tourne librement tout en assurant la transmission des efforts en translation verticale à la bielle 5 d'abord et, à travers celle-ci, de la pièce tronconique 8 et la tige filetée 9 à la pièce 3 du dynamomètre.

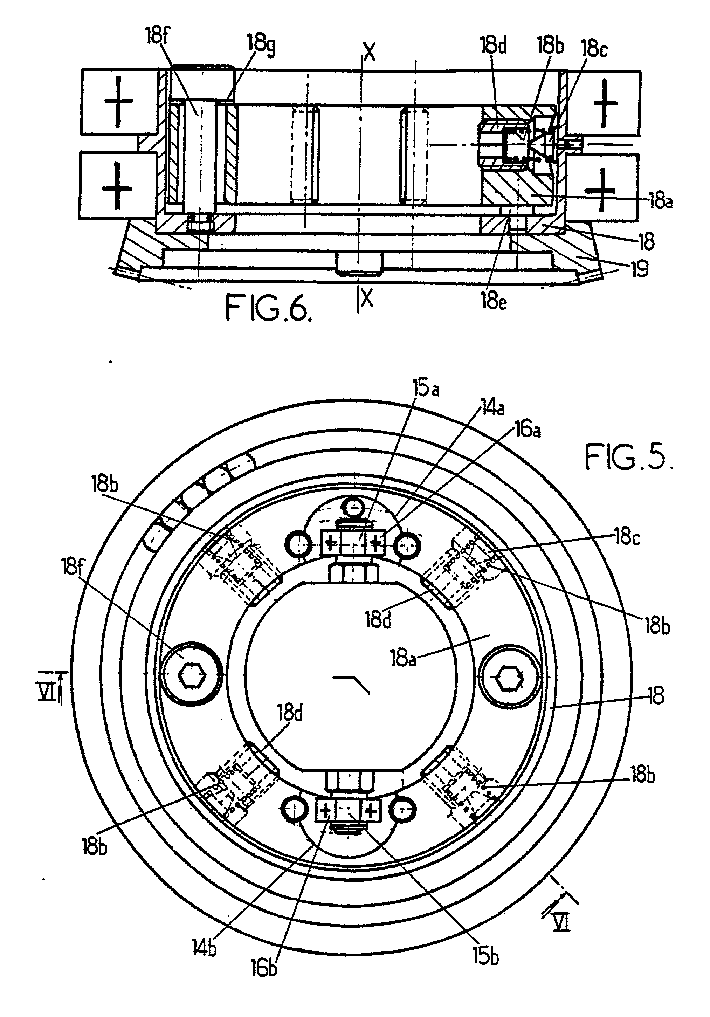

L'entraînement en rotation du piston 1 est assuré (voir figures 1, 5 et 6) au moyen de deux doigts 15a, 15b montés sur la tête 6a de la piston : chaque doigt 15a, 15b est équipé d'un roulement 16a, 16b, chaque doigt, solidaire en rotation, autour de l'axe XX, de la tête 6a de piston, pouvant coulisser librement dans un logement 17 ménagé dans une poulie 18; ce coulissement assure la liberté de déplacement en translation des doigts 15 suivant l'axe XX du piston 1. La poulie 18 sur laquelle est fixée une couronne dentée 19, est alésée pour recevoir une couronne intérieure 18a, le jeu entre les pièces 18 et 18a étant suffisant pour permettre le déplacement radial de la couronne 18a par rapport à son logement; quatre ressorts 18b, disposés en croix, maintiennent centrée la couronne 18a dans la poulie 18.

Chaque ressort 18b se positionne, du côté de la poulie 18, sur un téton 18c et se centre, du côté de la couronne 18a, dans l'alésage pratiqué dans une vis 18d qui permet le réglage de la pré-contrainte du ressort.

La couronne 18a repose sur quatre patins 18e (en polytétrafluoréthylène par exemple). Deux vis épaulées 18f définissent le jeu fonctionnel axial entre la couronne 18a et la poulie 18, sans entraver le déplacement radial relatif des deux pièces. Une rondelle en polyté trafluoréthylène 18g est placée sous la tête de chaque vis 18f.

Dans la couronne 18a sont détourés deux logements 14a, 14b, qui reçoivent les doigts d'entraînement 15a, 15b et leurs roulements 16a, 16b.

Le système ainsi défini assure un double contact symétrique entre la couronne intérieure 18a et la tête 6a de piston, indépendamment des dispersions d'usinage. Les rondelles 18g et les patins 18e limitent le frottement de contact entre la couronne 18a et la poulie 18.

Grâce à ce montage on annule, ou pour le moins limite, le couple de basculement appliqué par les doigts 15a, 15b d'entraînement en rotation.

Par ailleurs, pour limiter l'effort transmis à la bobine 4 et pour éviter une détérioration de celle-ci, on prévoit que la bielle 5 exerce l'effort, qui lui parvient du piston 1, sur une douille 5b guidée par un double alésage dans le bloc de couplage 6. Une rondelle 5c, arrêtée par un circlips 5d, limite la translation vers le haut de la douille 5b et de la bielle 5.

Un ressort 5e, entourant la douille 5b, s'appuie, à une extrémité, sur le bloc de couplage 6 et, à l'autre extrémité, sur un épaulement de la douille 5b. Il interdit la translation de celle-ci vers le bas pour un effort défini par la raideur et la pré-contrainte du ressort 5e.

Lorsque l'effort, appliqué par la bielle 5, est supérieur à six kilogrammes par exemple, la douille comprime le ressort 5e. Les roulements des doigts d'entraînement 15a, 15b viennent en butée sur la poulie 18.

La couronne dentée 19 engrène avec un pignon conique 20 entraîné en rotation à partir d'un moteur électrique 21, une démultiplication de la vitesse de rotation du moteur 21 étant transmise par l'ensemble 20-19 à la poulie 18 et donc au piston 1. Deux roulements 18₁, 18₂ sont prévus pour assurer une rotation aisée de la poulie 18.

La structure qui vient d'être décrite pallie tout défaut d'alignement entre la pièce 3 du dynamomètre et le piston 1 de mesure de la pression tout en assurant l'entraînement en rotation de ce piston à une vitesse de rotation inférieure à celle du moteur 21; une telle structure isole en outre le piston 1 des effets, notamment des vibrations, engendrés par les pièces en mouvement.

En fait la pièce 3, le bloc de couplage 6, la bielle 5, la bille 11 et la bague intérieure du roulement 12b (bague qui guide la bille) constituent les parties fixes en rotation, mais mobiles en translation verticale, de l'ensemble des pièces transmettant l'effort du piston au dynamomètre; par contre le piston 1, sa tête 6a et le roulement 12b, à l'exception de sa bague intérieure, constituent les parties mobiles en rotation de cet ensemble transmettant l'effort du piston à la bobine.

En ce qui concerne la structure du dynamomètre et son auto-étalonnage, on peut se référer au brevet français précité n° 2.481.801.

Comme dans ce brevet antérieur, on utilise des masses-étalons correspondant à la portée maximale du dynamomètre pour régler la gamme ou échelle de mesure en fonction de la pesanteur terrestre locale et du coefficient de conversion pression/force de l'ensemble de mesure (piston 1-cylindre 2) utilisé; ces masses-étalons permettent également de contrôler la linéarité du dynamomètre.

On va décrire maintenant comment il est possible, avec le dispositif selon l'invention, de réaliser des mesures absolues ou des mesures différentielles, après avoir toutefois fait remarquer que, comme dans le dispositif du brevet précité, la pression à mesurer (pression absolue par rapport au vide ou pression rela tive) est appliquée à l'enceinte supérieure 22 au-dessus de la face supérieure 23 du piston 1, une bride 24 permettant la connexion avec la source de pression à mesurer. L'enceinte inférieure définie ci-après, dans laquelle plonge la partie inférieure du piston 1 avec sa face inférieure 25, reçoit la pression de référence qui peut être soit le vide, soit la pression atmosphérique, soit une seconde pression dans le cas où l'on veut mesurer la différence entre les pressions appliquées sur la face supérieure 23 et sur la face inférieure 25 du piston 1.

Conformément à l'invention, l'enceinte inférieure qui doit pouvoir être mise sous vide ou sous une pression bien déterminée désirée est étanche.

L'enceinte inférieure 22a,44a-44d est formée dans deux pièces, à savoir :
- un corps intermédiaire 26 dans lequel est logée une partie décrite ci-dessus de la transmission de la rotation du moteur 21 au piston 1, ainsi qu'une partie des organes de transmission du déplacement linéaire du piston 1 à la pièce 3, partie également décrite ci-dessus,
- un corps principal 27 qui renferme la partie active du dynamomètre (pièce 3 et bobine 4).

L'ensemble 3-4 est monté "en l'air" sur une plaque de base 28 fixée par trois colonnes 29 (disposées en triangle) au corps principal 27. Un fond 30 vient fermer le corps principal 27, un joint torique 31 assurant l'étanchéité entre le corps principal 27 et le fond 30; de même un joint torique 32 assure l'étanchéité entre le corps intermédiaire 26 et le corps principal 27. Le montage amovible du fond 30 permet une bonne accessibilité à la bobine du dynamomètre, une vis de réglage 33 assurant la fixation en position correcte de la bobine 4 sur la plaque 28.

La liaison électrique entre la bobine 4 du dyna momètre et l'électronique du dynamomètre est assurée grâce à une coupelle en verre 34 traversée par des broches 35 sur lesquelles sont fixés les fils de liaison 36 et 37 entre la bobine du dynamomètre et l'électronique de celui-ci. Une bride 38 coiffe la coupelle de verre 34, un joint torique 39 assurant l'étanchéité du passage des connexions électriques qui sortent finalement sous forme d'une nappe de fils 40.

Par ailleurs, le moteur électrique 21 extérieur assure l'entraînement du pignon denté 20 grâce à un accouplement magnétique 41 à effet d'aimantation purement radial n'entraînant donc aucune réaction axiale sur ledit pignon, ce qui limite les pertes par frottement; l'accouplement magnétique assure également la fonction du limiteur de couple et donc de protection du moteur électrique 21 en cas de surcharge. L'accouplement magnétique 41 est logé dans un boîtier 42, un joint torique 43 assurant l'étanchéité entre le boîtier 42 et le corps intermédiaire 26.

On voit donc que le volume de l'enceinte inférieure dans les pièces 26 et 27 a été réduit au minimum; il est essentiellement constitué par les espaces 44a, 44b, 44c et 44d. Ceci facilite la mise sous vide de l'enceinte de référence lorsque l'on désire réaliser des mesures de pression absolue.

Avantageusement on perce toutes les vis et les colonnes qui, si elles emprisonnaient du gaz, ralenti raient la mise sous vide de l'enceinte inférieure. Quant aux joints toriques assurant l'étanchéité de l'enceinte, ils sont enduits d'une graisse aux silicones qui, en parfaisant l'étanchéité, présente un excellent comportement au vide du fait de sa faible tension de vapeur.

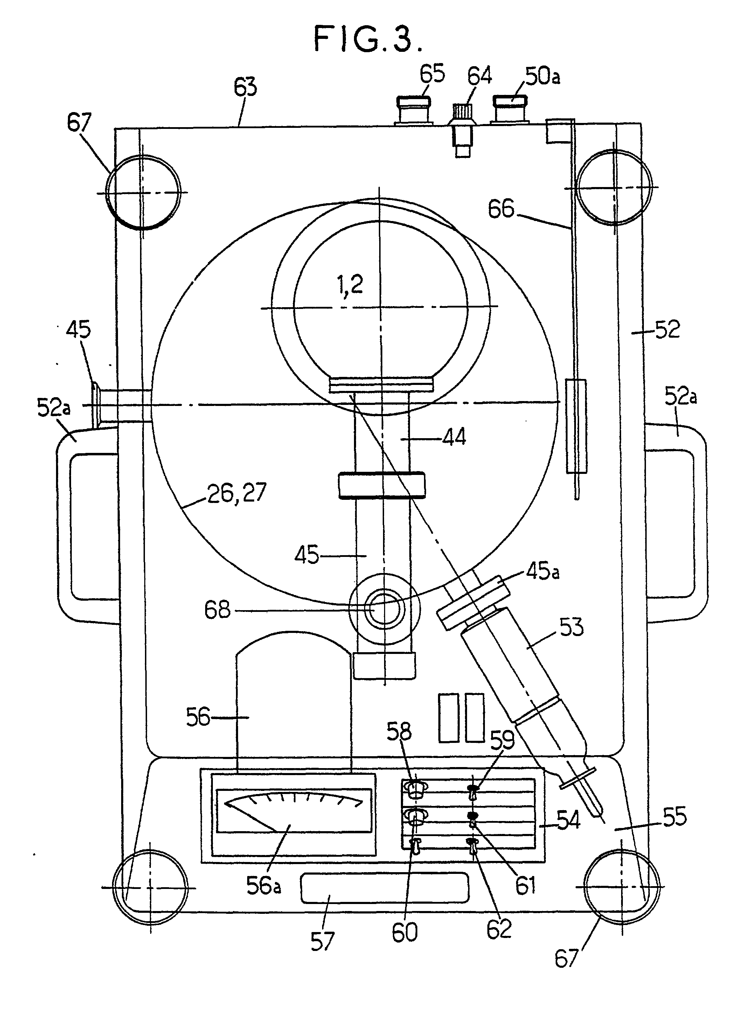

Le branchement de l'enceinte inférieure 22a,44a-44d se fait au moyen de deux brides, dont une seule 45 est visible sur la figure 1, cette bride 45, fixée sur le corps principal 27, sortant vers l'exté rieur et étant destinée au branchement sur une pompe à vide, sur la pression atmosphérique ou sur une pression par rapport à laquelle on veut mesurer une pression apliquée par la bride supérieure 24, tandis que l'autre bride 45 (représentée sur la figure 30 est reliée à une jauge à vide dont les indications sont visualisées par un indicateur de vide visible sur la face avant du carter (voir ci-après, avec référence à la figure 3).

L'enceinte inférieure 44a-44d que l'on vient de décrire présente les caractéristiques suivantes qui permettent une mesure de précision (absolue, relative ou différentielle, suivant le cas) de la pression appliquée sur la face supérieure 23 du piston 1 par la bride 24 :
- elle est étanche tout en étant facilement démontable,
- elle n'entrave pas le réglage de la coaxialité entre l'axe de la pièce 3 et l'axe du piston 1,
- elle permet le passage d'une information électrique entre la bobine 4 du dynamomètre et son électronique,
- elle autorise la transmission de la rotation du piston 1 sans perte d'étanchéité,
- son dégazage est facile lorsqu'on désire la mettre sous vide pour réaliser une mesure de pression absolue,
- elle possède un branchement pour admettre l'application d'une pression de référence souhaitée,
- elle possède une prise pour brancher une sonde de vide destinée à évaluer le vide résiduel.

Revenant maintenant sur le piston 1 et le cylindre 2, on notera que ceux-ci sont réalisés de préférence en carbure de tungstène. On prévoit plusieurs jeux pistons-cylindres, ces jeux se différenciant entre eux par la valeur de la section du piston et donc l'alésage du cylindre. Ces ensembles pistons-cylin dres définissent des gammes de pression d'étendues différentes, l'aug mentation du domaine de pression entraînant bien entendu la diminution de la sensibilité de l'affichage numérique de la pression ou différence de pression mesurée. Par contre les dimensions extérieures du cylindre des différents jeux sont identiques, ce qui permet l'échangeabilité des différents jeux dans la pièce 2a du dispositif qui reçoit le cylindre.

Le changement d'un ensemble piston-cylindre peut être réalisé sans avoir à démonter les deux pièces de cet ensemble, ce qui est très avantageux, car autrement leur nettoyage poserait des problèmes difficiles. Cet ensemble est donc unitaire et le cylindre 2 est maintenu dans son logement dans la pièce 2a au moyen de deux brides inférieure 46 et supérieure 47 fixées par des vis imperdables 48. Ces brides comprennent chacune un joint torique 46a, 47a. La bride supérieure 47 qui comporte le branchement 24 est réalisée de préférence en acier inoxydable afin de résister aux nombreuses sollicitations dont elle fait l'objet.

La mesure des pressions absolues est surtout intéressante pour de faibles valeurs (inférieures à 10 bars). Au-delà, il est plus simple de décomposer la mesure en une mesure de pression relative de grande précision et une mesure de pression absolue, celle de la pression atmosphérique. La somme des deux donne la pression absolue recherchée. Cela a conditionné le choix d'un ensemble piston-cylindre fonctionnant au gaz sans graissage. Ce mode de fonctionnement assure une bonne mobilité au piston malgré la valeur faible des pressions.

Pour que le recentrage du piston se fasse bien, il faut que le jeu entre le cylindre et le piston soit alimenté en permanence. Une disposition particulière permet d'assurer cette fonction, quel que soit le type de fonctionnement. Cela évite au piston de se bloquer dans le cylindre.

Nous allons indiquer ci-après, avec référence aux figures 4A à 4F, cette disposition particulière, mais auparavant on va donner encore des explications sur l'ensemble du dispositif, avec référence aux figures 2 et 3.

Pour augmenter la précision de la mesure de pression, on tient avantageusement compte de la température de la mesure, car une variation de température dilate plus ou moins l'ensemble piston-cylindre, ce qui modifie la valeur de la section effective réelle du piston.

A ce sujet, ainsi qu'au sujet du coefficient normal de conversion pression/force, on peut se référer au brevet n° 2.481.801 précité.

On mesure la température au moyen d'une sonde de température 49 (figure 2) qui est aussi proche que possible de l'ensemble du piston 1-cylindre 2, sans être solidaire de cet ensemble.

La sonde 49 est introduite dans un embout en cuivre 49a, lui-même emmanché dans un tube 49b. Une gaine thermo-rétractable 49c protège les fils de la sonde et vient enserrer l'embout libre du tube 49b. L'ensemble est monté collé dans un barreau support 49d qui permet, par des vis imperdables, un montage en l'air sous la collerette 49e du corps intermédiaire 46. Une lumière permet la sortie de la sonde.

Cette sonde de température 49 permet de corriger par calcul la valeur de la pression grâce à un calculateur qui reçoit d'un côté les mesures numériques du dynamomètre grâce à l'interface mentionné ci-dessus, et d'un autre côté par un autre interface (éventuellement intégré au premier interface) les indications numériques d'un voltmètre numérique non représenté connecté par un câble 50 à la sonde de température 49. Le calculateur donne donc ainsi à tout moment la valeur numérique corrigée de la pression absolue relative ou différentielle que l'on désire mesurer.

Référence étant maintenant faite à la figure 3, on va exposer le montage général du dispositif qui vient d'être décrit avec référence aux figures 1 et 2.

Le dispositif est suspendu dans un carter 52 par trois vis, l'isolation aux vibrations étant assurée par une rondelle en une matière isolante au point de vue vibration, par exemple en "Klingerit" disposée entre le corps intermédiaire 26 et le carter 52, ainsi que par trois bagues épaulées, par exemple en "Rylsan", montées sur les trois vis de fixation.

Sur la figure 3 on a repéré schématiquement le poste de mesure piston 1-cylindre 2, l'accouplement magnétique 44, le moteur électrique d'entraînement 45, ainsi que l'ensemble corps intermédiaire 26-corps principal 27.

La jauge à vide est illustrée en 53 et elle est branchée directement sur la bride 45a (qui est portée comme la bride 45 par le corps principal 27).

Une plaque de commande 54 est portée par la face avant inclinée 55 du carter 52. La plaque de commande 54 porte un indicateur de vide 56 avec un cadran 56a d'une part, et une série d'interrupteurs et de voyants, d'autre part; il s'agit d'un voyant 58 et d'un interrupteur 59 pour le contrôle de la mise en route du dispositif, d'un voyant 60 et d'un interrupteur 61 pour le contrôle de la mise sous tension de l'indicateur de vide 56 et enfin d'un interrupteur 62 pour déclencher la remise à zéro de l'affichage, cet interrupteur étant utilisé lors du tarage du dispositif.

La face arrière 63 du dispositif comporte une plaque de fermeture qui vient s'encliqueter sur le carter proprement dit 52; cette plaque de fermeture encadre une équerre portant les liaisons électriques, à savoir la sortie 50a pour la lecture de la sonde de température et pour la lecture de la pression résiduelle, un fusible 64 de protection du système électrique du dispositif, une sortie 65 pour le raccordement au secteur et enfin un interface double 66 permettant la liaison du dispositif avec un calculateur déterminant la valeur de la pression corrigée de l'influence de la température affichée numériquement dans la fenêtre 57.

Un circuit imprimé, placé sous le corps principal, assure la liaison entre les différents éléments électriques.

Quatre vis calantes 67 permettent de régler la verticalité de l'axe du piston, en se basant sur les indications d'un niveau à bulle 68 placé sur le dessus de l'appareil.

Deux poignées 52a permettent la prise en mains. Elles sont placées de façon à ce que la masse de l'appareil soit également répartie.

L'encombrement hors tout de l'appareil est de : hauteur 290 mm; largeur 400 mm; longueur 490 mm.

On va maintenant revenir sur l'ensemble de mesure piston 1-cylindre 2. Comme indiqué ci-dessus, le piston 1 qui est mobile en translation verticalement (selon l'axe XX) dans l'alésage du cylindre 2 et qui est entraîné en rotation autour de son axe XX par le moteur 21, est soumis sur ses deux faces, supérieure 23 et inférieure 25, aux pressions qui règnent respectivement dans l'enceinte supérieure 22 et dans l'enceinte inférieure 44a, 44b, 44c, 44d.

La pression qui règne dans l'enceinte 22 est la pression qui doit être mesurée soit d'une manière absolue lorsque le vide règne dans l'enceinte inférieure, soit d'une manière relative lorsque la pression atmosphérique règne dans l'enceinte inférieure; en outre on peut également mesurer une différence de pressions, à savoir entre la pression d'un premier fluide arrivant dans l'enceinte 22 par la bride 24 et celle d'un second fluide arrivant dans l'enceinte inférieure 44a-44d par la bride 45. La pression (nulle, atmosphérique ou d'un second fluide) régnant dans l'enceinte inférieure 44a-44d sera appelée dorénavant pression de référence $P_1$, tandis que la pression régnant dans l'enceinte 22 sera appelée pression à mesurer $P_2$, et de même on appellera enceinte de mesure l'enceinte 22 et enceinte de référence l'enceinte 44a-44d.

En l'absence de mesures particulières :
- d'une part, la fuite du gaz entre l'enceinte de mesure et celle de référence par le jeu existant entre le piston 1 et le cylindre 2, dépend de la valeur de la pression mesurée; plus cette dernière est forte, plus le débit dans le jeu est important; ce débit vient perturber la valeur de la pression de référence; et
- d'autre part, lors du tarage du dynamomètre, il est nécessaire de mettre les deux enceintes supérieure et inférieure à la valeur de la pression de référence, à savoir le vide; le principe même du piston 1 tournant dans un cylindre 2 nécessite l'écoulement permanent d'un fluide qui évite tout contact entre le cylindre et le piston; le recentrage du piston, entraîné en rotation, est assuré par le fluide de fuite; si ce dernier vient à disparaître, immanquablement le piston 1 se bloque dans le cylindre 2.

En particulier lorsque l'on admet dans l'enceinte de mesure une pression absolue inférieure à une dizaine de millibars, le piston risque de se bloquer.

La présente invention a pour objet, en ce qui concerne l'ensemble de mesure, d'éviter que :
- lorsque l'enceinte de référence est mise sous vide, sa pression résiduelle dépend de la pression admise dans l'enceinte de mesure;
- les mesures de faibles pressions comme le tarage au vide, ne bloquent le piston dans son cylindre.

De ce fait l'invention prévoit une alimentation en gaz du jeu entre le piston 1 et le cylindre 2 telle que cette alimentation;
- assure un écoulement de gaz dans le jeu, quel que soit le type de fonctionnement; et
- fournisse un gaz propre et sec, une impureté pouvant coincer le piston, tandis que des traces d'humidité, en polluant le piston, risquent de perturber la mesure.

Pour réaliser les buts précités, l'alésage du cylindre 2 comporte une gorge circulaire 69 par exemple à mi-hauteur du cylindre 2, ainsi qu'une gorge annulaire 71 dans la pièce 2a au même niveau que la gorge 69. Ces deux gorges communiquent par un ou plusieurs (en particulier deux) canaux 70 percés dans le cylindre 2. Des canaux 72 et 73, perpendiculaires entre eux, mettent en communication la gorge annulaire 71 - et donc la gorge annulaire 69 (du fait des canaux 70) - avec une sortie filetée 74 ménagée dans le corps intermédiaire 26. Un bouchon collé 75 est prévu à des fins de nettoyage éventuel, tandis qu'un joint torique 76 assure l'étanchéité du canal 73 au passage de la pièce 2a au corps intermédiaire 26.

Un tube souple 77 est fixé à la sortie 74; ce tube souple 77 se termine dans un filtre 78 qui plonge dans une bouteille 79 contenant des cristaux d'un produit dessechant. La bouteille 79 est fixée par des boulons 80 au corps principal 27 et comporte des orifices d'admission de l'air atmosphérique.

Du fait que la gorge 69 se situe, dans l'exemple, à égale distance des extrémités du cylindre 2 et que le jeu entre le piston 1 et le cylindre 2 est le même sur toute la longueur du cylindre par construction, le débit dans ce jeu est proportionnel à la différence entre la pression du gaz dans la gorge 69, à savoir la pression atmosphérique $P_a$ et celle de l'extrémité supérieure ou inférieure concernée.

Si l'on appelle $Q_1$ le débit dans la partie in férieure du jeu et $Q_2$ le débit dans la partie supérieure du jeu, c'est-à-dire respectivement au-dessous et au-dessus de la gorge 69 et chaque canal 70, $Q_1$ est proportionnel à $P_1 - P_a$, tandis que $Q$ est proportionnel à $P_2 - P_a$, $P_1$ et $P_2$ pouvant être plus grands ou plus petits que la pression atmosphérique $P_a$.

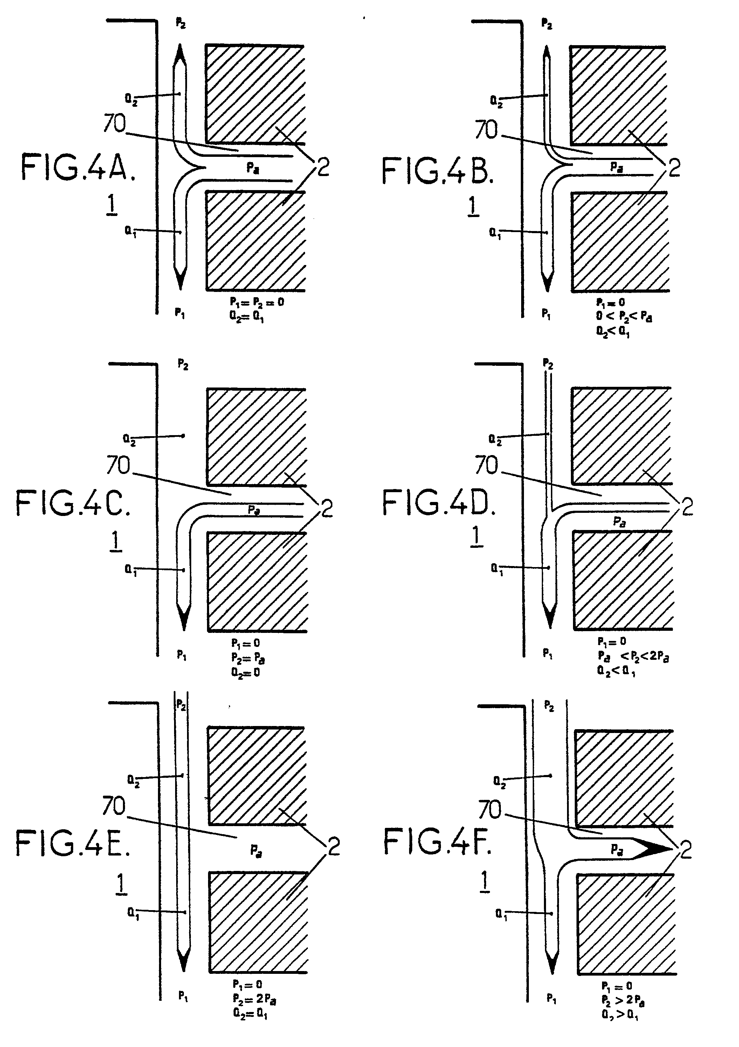

Le rôle du montage qui vient d'être détaillé pour assurer une rotation impeccable du piston 1 dans le cylindre 2 va maintenant être explicité avec référence aux figures 4A, 4B, 4C, 4D, 4E et 4F qui correspondent à différentes valeurs de la pression $P_2$ à mesurer, valeurs qui croissent progressivement des figures 4A à 4F, alors que les pressions $P_a$ et $P_1 = 0$ restent constantes et nulles.

FIGURE 4A

Cette figure concerne la tarage du dynamomètre pour lequel l'enceinte de mesure 22 et l'enceinte de référence 44a-44d sont toutes deux à la pression nulle en étant reliées entre elles et mises sous vide. Les deux faces 23 et 25 du piston sont alors soumises à la même pression et les débits $Q_1$ et $Q_2$ dans les deux demi-jeux inférieur et supérieur de l'ensemble piston 1-cylindre 2 sont identiques et de sens opposés, étant donné que la différence de pression entre l'alimentation (pression $P_a$) et les extrémités ($P_1 = P_2$) est égale à une atmosphère : $P_a - P_1 = P_a - P_1 = 1$ atm.

FIGURE 4B

La pression $P_2$ dans l'enceinte de mesure est maintenant supérieure à la pression $P_1 = 0$ dans l'enceinte de référence, tout en restant inférieure à la pression atmosphérique $P_a$.

Le débit $Q_2$, dans le cas de la figure 4B, diminue par rapport au débit $Q_2$, dans le cas de la figure 4A, proportionnellement à la différence entre la pression $P_2$ et la pression nulle.

Par contre le débit $Q_1$ reste inchangé car la différence de pression entre chaque canal 70 et l'enceinte de référence n'a pas changé par rapport à la figure 4A.

En définitive le débit d'alimentation $Q_1 + Q_2$ pour les canaux 70 diminue en même temps que le débit $Q_2$.

FIGURE 4C

La pression $P_2$ continuant à croître, elle atteint la pression atmosphérique $P_a$. Dans ce cas le débit $Q_2$ est nul du fait que $P_2 = P_a$. Quant au débit $Q_1$, il reste inchangé par rapport au débit $Q_1$ des figures 4A et 4B, étant donné que $P_a$ et $P_1$ n'ont pas changé.

Comme on le voit sur la figure 4C, tout le débit d'alimentation passe entièrement dans la partie inférieure du jeu (débit $Q_1$), aucun écoulement n'ayant lieu dans la partie supérieure de ce jeu ($Q_2 - 0$).

FIGURE 4D

Maintenant la pression $P_2$ (qui continue à augmenter) dépasse la pression atmosphérique $P_a$ tout en restant inférieure au double de la pression atmosphérique 2 $P_a$.

L'écoulement dans le demi-jeu supérieur a changé de sens, le débit $Q_2$ n'étant plus nul; le débit $Q_1$ restant inchangé pour les mêmes raisons que ci-dessus, le débit de l'alimentation diminue étant donné que s'y ajoute le débit $Q_2$ pour constituer le débit $Q_1$.

FIGURE 4E

La pression $P_2$ est maintenant égale à deux fois la pression atmosphérique : $P_2 = 2$ $P_a$.

La différence de pression à laquelle est sousmis le demi-jeu supérieur est égale à la pression atmosphérique et de ce fait le débit $Q_2$ est égal au débit $Q_1$. Il en résulte que le débit d'alimentation est nul dans chaque canal 70.

FIGURE 4F

La pression $P_2$ continuant à augmenter est main tenant supérieure au double de la pression atmosphérique.

De ce fait le débit $Q_2$ est supérieur au débit $Q_1$ et l'écoulement dans chaque canal 70 est inversé.

On notera que dans toutes les figures 4A à 4F pour lesquelles le vide règne dans l'enceinte inférieure et la pression atmosphérique dans chaque canal 70, le débit $Q_1$ est toujours le même, quelle que soit la valeur de la pression de mesure $P_2$.

La perturbation créée par cet écoulement au niveau de la pression de référence est constante. Elle peut être déterminée et il peut en être tenu compte.

Surtout, dans tous les cas, du gaz est présent entre le piston 1 et le cylindre 2, évitant ainsi un coincement du piston par rupture de film fluide dans le jeu entre piston et cylindre.

On notera que lorsque la pression de mesure $P_2$ est supérieure à plusieurs fois la pression atmosphérique, par exemple plus de dix fois supérieure à la pression atmosphérique, il y a intérêt à effectuer une mesure relative (par rapport à la pression atmosphérique) et de déterminer la valeur exacte de cette pression atmosphérique.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

## Revendications

1. Dispositif pour la mesure très précise des pressions de fluide avec affichage de la pression mesurée, comportant un cylindre vertical (2), un piston (1) apte à coulisser dans ce cylindre à frottement visqueux, la pression à mesurer étant appliquée sur la face supérieure (23) du piston dans une enceinte supérieure (22), des moyens pour entraîner en rotation ledit piston dans ledit cylindre, une balance dynamométrique électromagnétique de précision (B) à affichage et comportant une pièce (3) destinée à se voir appliquer la force à mesurer et des moyens pour transmettre à la pièce de la balance la force appliquée sur le piston par la pression à mesurer, avec limitation des efforts maximaux, et caractérisé en ce qu'il comporte, en combinaison avec l'ensemble cylindre-piston
 - une enceinte étanche inférieure (22a, 44a–44d) à la partie inférieure de l'ensemble cylindre-piston, cette enceinte inférieure pouvant être mise sous vide ou mise sous une pression désirée notamment la pression atmosphérique ou celle d'un fluide, et
 - des moyens pour alimenter en permanence, en un fluide, le jeu entre le piston (1) et le cylindre (2) afind d'assurer un centrage correct du piston dans le cylindre, même si les enceintes supérieure et inférieure précitées sont mises sous vide.

2. Dispositif selon la revendication 1, caractérisé en ce que lesdits moyens pour alimenter en fluide ledit jeu sont constitués par une première gorge annulaire (69) prévue dans le cylindre et alimentée en gaz propre et sec à une pression constante, telle que la pression atmosphérique.

3. Dispositif selon la revendication 2, caractérisé en ce que les moyens pour alimenter en gaz propre et sec ladite seconde gorge annulaire (69) comprennent une première gorge annulaire (71) ménagée sur la périphérie d'une pièce (2a) qui entoure ledit cylindre (2) et qui est en communication, d'une part, avec ladite première gorge annulaire (69), et, d'autre part, avec des canaux (70, 72, 73) percés dans le dispositif et alimentés à partir d'un récipient (79) contenant un produit qui retient l'humidité et un produit qui filtre les impuretés, ce récipient étant alimenté en air atmosphérique.

4. Dispositif selon l'une quelconque des revendications précédentes, caractérisé en ce qu'il comporte des moyens élastiques (5e) limitant l'effort transmis du piston (1) à la pièce (3) de la balance (B).

5. Dispositif selon l'une quelconque des revendications précédentes, caractérisé en ce qu'il comporte en outre des moyens (49) pour mesurer la température au niveau de l'ensemble cylindre-piston et des moyens pour corriger, en fonction de cette température, la valeur de la pression mesurée.

6. Dispositif selon l'une quelconque des revendications précédentes, caractérisé en ce qu'il comporte un accouplement magnétique (41) entre le moteur (21) d'entraînement en rotation du piston (1) et les moyens mécaniques solidaires de ce piston et entraînés en rotation avec lui.

7. Dispositif selon la revendication 5 ou 6, caractérisé en ce qu'il comprend au moins un interface de liaison avec un calculateur recevant les indications numériques du dynamomètre et de préférence les indications des moyens (49) déterminant la température.

8. Dispositif selon l'une quelconque des revendications précédentes, caractérisé en ce qu'il comporte des moyens symétriques d'entraînement mécanique souple (14a, 14b; 15a, 15b; 16a, 16b; 18b, 18c, 18d, 18e, 18f, 18g) entre le moteur (21) et le piston (1).

## Claims

1. A device for very precisely measuring a fluid pressure giving an indication of the pressure which is measured, comprising a vertical cylinder (2), a piston (1) adapted to slide in this cylinder with viscous friction, the pressure to be measured being applied on the upper face (23) of the piston in an upper space (22), means for entraining the said piston in rotation in the said cylinder, a precision dynamometric electromagnetic balance (B) with an indicator and made up of a member (3) intended to make apparent the application of the force to be measured, and means in order to transmit the force, applied to the piston by the pressure to be measured, to the member of the balance, with a limitation of the maximum forces, characterized in that it comprises, in combination with the cylinder and piston assembly:
 – a lower sealed space (22a, 44a–44d) at the lower part of the cylinder and piston assembly, said lower space being able to be put under vacuum or at a desired pressure, more especially atmospheric pressure or the pressure of a fluid, and
 – means to permanently feed with a fluid the clearance between the piston (1) and the cylinder (2) in order to ensure correct centering of the piston in the cylinder, even if the said upper and lower spaces are put under vacuum.

2. The device as claimed in claim 1, characterized in that the said means for feeding fluid into the said clearance are constituted by a first annular channel (69) provided in the cylinder and fed with clean, dry gas at a constant pressure, such as the atmospheric pressure.

3. The device as claimed in claim 2, characterized in that the means for feeding a clean dry gas into the said first annular channel (69) comprise a second annular channel (71) machined into the periphery of a member (2a which surrounds the said cylinder (2) and which is in communication on one side with the said first annular channel (69) and on the other side with ducts (70, 72 and 73) drilled in the device and supplied from a receiver (79) containing a product which holds back humidity and a product with filters off impurities, said receiver being supplied with atmospheric air.

4. The device as claimed in any one of the preceding claims, characterized in that it comprises elastic means (5e) to limit the force transmitted by the piston (1) to the member (3) of the balance (B).

5. The device as claimed in any one of the preceding claims, characterized in that it furthermore comprises means (49) to measure the temperature at the level of the cylinder and piston assembly, and means to correct the value of the pressure measured as a function of this temperature.

6. The device as claimed in any one of the preceding claims, characterized in that it comprises a magnetic coupling (41) between the motor (21) for entraining the piston (1) in rotation and the mechanical means connected with this piston and entrained in rotation with it.

7. The device as claimed in claim 5 or claim 6, characterized in that it comprises at least one liaison interface connected with a computer receiving digital data from the dynamometer and preferably data from means (49) detecting the temperature.

8. The device as claimed in any one of the preceding claims characterized in that it comprises symmetrical means for mechanical souple entrainment (14a, 14b; 15a, 15b; 16a, 16b; 18b, 18c, 18d, 18e, 18f, and 18g) between the motor (31) and the piston (1).

## Patentansprüche

1. Vorrichtung zur hochgenauen Messung der Fluiddrücke mit Anzeige des gemessenen Druckes, mit einem senkrechten Zylinder (2), einem Kolben (1), der in diesem Zylinder entgegen viskoser Reibung verschiebbar ist, wobei der zu messende Druck auf die Oberseite (23) des Kolbens in einer oberen Kammer (22) ausgeübt wird, Mitteln zum Verdrehen des Kolbens in dem Zylinder, einer dynamometrischen elektromagnetischen Präzisionswaage (B) mit Anzeige, die ein Teil (3) aufweist, welches dazu bestimmt ist, daß auf dieses die zu messende Kraft ausgeübt wird, sowie Mitteln zur Übertragung der auf dem Kolben durch den zu messenden Druck ausgeübten Kraft auf das Teil der Waage, mit Begrenzung der maximalen Beanspruchung, und dadurch gekennzeichnet, daß sie in Kombination mit der Zylinder-Kolben-Einheit umfaßt:

– eine untere dichte Kammer (22a, 44a–44d) im unteren Teil der Zylinder-Kolben-Einheit, wobei diese untere Kammer unter Vakuum oder unter einen gewünschten Druck gesetzt werden kann, insbesondere den Atmosphärendruck oder den Druck eines fluiden Mediums, und

– Mittel zur andauernden Fluideinspeisung in das Spiel zwischen dem Kolben (1) und dem Zylinder (2), um eine korrekte Zentrierung des Kolbens in dem Zylinder zu gewährleisten, selbst dann, wenn die obere Kammer und die untere Kammer evakuiert sind.

2. Vorrichtung nach Anspruch 1 dadurch gekennzeichnet, daß die genannten Mittel zur Fluideinspeisung in das Spiel durch eine erste Ringnut (69) gebildet sind, welche in dem Zylinder vorgesehen ist und mit reinem und trockenem Gas bei konstantem Druck versorgt wird, beispielsweise Atmosphärendruck.

3. Vorrichtung nach Anspruch 2, dadurch gekennzeichnet, daß die Mittel zur Einspeisung von reinem und trockenem Gas in die erste Ringnut (69) eine zweite Ringnut (71) umfassen, welche am Umfang eines Teiles (2a) angebracht ist, das den Zylinder (2) umgibt und einerseits in Verbindung steht mit der genannten ersten Ringnut (69) sowie andererseits mit Kanälen (70, 72, 73), welche in die Vorrichtung eingebracht sind und von einem Behälter (79) gespeist werden, welcher ein Produkt enthält, das Feuchtigkeit zurückhält, sowie ein Produkt enthält, welches Verunreinigungen ausfiltert, wobei dieser Behälter mit atmosphärischer Luft versorgt wird.

4. Vorrichtung nach einem der vorstehenden Ansprüche, dadurch gekennzeichnet, daß sie elastische Mittel (5e) enthält, welche die vom Kolben (1) auf das Teil (3) der Waage (B) übertragene Kraft begrenzen.

5. Vorrichtung nach einem der vorstehenden Ansprüche, dadurch gekennzeichnet, daß sie ferner Mittel (49) umfaßt, um die Temperatur an der Zylinder-Kolben-Einheit zu messen, sowie Mittel enthält, um in Abhängigkeit von dieser Temperaturmessung den Wert des gemessenen Druckes zu korrigieren.

6. Vorrichtung nach einem der vorstehenden Ansprüche, dadurch gekennzeichnet, daß sie eine magnetische Kopplung (41) zwischen dem Drehantriebsmotor (21) des Kolbens (1) und den mechanischen Mitteln umfaßt, welche mit diesem Kolben fest verbunden sind und mit diesem in Drehung versetzt werden.

7. Vorrichtung nach Anspruch 5 oder 6, dadurch gekennzeichnet, daß sie wenigstens eine Schnittstelle zur Verbindung mit einem Rechner umfaßt, welcher digitale Anzeigewerte von dem Dynamometer sowie vorzugsweise Anzeigewerte von den die Temperatur bestimmenden Mitteln (49) empfängt.

8. Vorrichtung nach einem der vorstehenden Ansprüche, dadurch gekennzeichnet, daß sie symmetrische flexible mechanische Mitnahmemittel (14a, 14b; 15a, 15b; 16a, 16b; 18b, 18c, 18d, 18e, 18f, 18g) zwischen dem Motor (21) und dem Kolben (1) umfaßt.

FIG.1.

FIG.2.

EP 0 202 970 B1

# FIG.3.

FIG.4A.

$P_2$

$Q_2$

70

2

$P_a$

$Q_1$

$P_1$

$P_1 = P_2 = 0$
$Q_2 = Q_1$

FIG.4B.

$P_2$

$Q_2$

70

2

$P_a$

$Q_1$

$P_1$

$P_1 = 0$
$0 < P_2 < P_a$
$Q_2 < Q_1$

FIG.4C.

$P_2$

$Q_2$

70

2

$P_a$

$Q_1$

$P_1$

$P_1 = 0$
$P_2 = P_a$
$Q_2 = 0$

FIG.4D.

$P_2$

$Q_2$

70

2

$P_a$

$Q_1$

$P_1$

$P_1 = 0$
$P_a < P_2 < 2P_a$
$Q_2 < Q_1$

FIG.4E.

$P_2$

$Q_2$

70

2

$P_a$

$Q_1$

$P_1$

$P_1 = 0$
$P_2 = 2P_a$
$Q_2 = Q_1$

FIG.4F.

$P_2$

$Q_2$

70

2

$P_a$

$Q_1$

$P_1$

$P_1 = 0$
$P_2 > 2P_a$
$Q_2 > Q_1$

FIG.6.

FIG.5.